# FASCICULE DE BREVET EUROPEEN

(11) **EP 3 560 018 B1**
(45) Date de publication et mention de la délivrance du brevet: **03.02.2021**
(21) Numéro de dépôt: 17821696.6
(22) Date de dépôt: 08.12.2017
(51) Int. Cl.: H01M 8/1004, H01M 8/0273, H01M 8/0286, H01M 8/1018

(54) **PROCÉDÉ DE FABRICATION D'ASSEMBLAGE MEMBRANE-ÉLECTRODE POUR PILE À COMBUSTIBLE ET LIGNE DE FABRICATION**
VERFAHREN ZUR HERSTELLUNG EINER MEMBRAN-ELEKTRODEN-EINHEIT FÜR BRENNSTOFFZELLE
PROCESS OF MANUFACTURING AN MEMBRANE-ELECTRODE ASSEMBLY FOR A FUEL CELL

(30) Priorité: 20.12.2016 FR 1662833
(43) Date de publication de la demande: 30.10.2019
(73) Titulaire: Compagnie Générale des Etablissements Michelin, 63000 Clermont-Ferrand (FR)
(72) Inventeur: JOYE, Olivier, 63040 Clermont-Ferrand Cedex 9 (FR)
(74) Mandataire: Lavoix
(86) Numéro de dépôt international: PCT/FR2017/053467
(87) Numéro de publication internationale: WO 2018/115628

(56) Documents cités:
- EP-A1- 2 698 250
- WO-A1-2009/106620
- DE-A1-102016 001 580
- FR-A1- 2 977 725
- FR-A1- 3 001 833
- US-A1- 2003 188 413
- US-A1- 2010 038 020

## Description

### DOMAINE DE L'INVENTION

La présente invention concerne le domaine des piles à combustibles, et plus particulièrement le domaine de la fabrication et de l'assemblage de piles à combustible.

Une pile à combustible permet la génération d'énergie électrique par une réaction électrochimique à partir d'un carburant, généralement de l'hydrogène, et d'un comburant, généralement de l'oxygène.

Une pile à combustible du type à membrane échangeuse de protons à électrolyte solide (PEMFC) comprend habituellement un empilement de cellules élémentaires, en forme de plaques, constituant des générateurs électrochimiques, chacune des cellules étant séparée des cellules adjacentes par des plaques bipolaires. Chaque cellule comprend un élément anodique et un élément cathodique, séparés par un électrolyte solide sous la forme d'une membrane échangeuse d'ions, réalisée par exemple en un matériau polymère perfluoré sulfuré.

Cet ensemble comprenant l'élément cathodique, l'élément anodique et l'électrolyte solide forme un assemblage membrane-électrode, également appelé AME. Selon une variante de réalisation habituelle, chaque plaque bipolaire assure d'un côté l'alimentation en carburant de la cellule adjacente à ce côté et de l'autre côté l'alimentation en comburant de la cellule adjacente à cet autre côté, les alimentations assurées par les plaques bipolaires se faisant en parallèle. Des couches de diffusion de gaz, par exemple réalisées en tissu de carbone, sont installées de part et d'autre des AME pour assurer la conduction électrique et l'arrivée homogène des gaz réactifs fournis via les plaques bipolaires.

Le document FR 3001833 décrit un procédé de fabrication de cellule électrochimique comprenant des renforts situés de part et d'autre de la membrane et comprenant un joint situé entre chaque plaque métallique et chaque renfort de la cellule.

La présente invention vise à proposer un procédé de fabrication d'assemblage membrane-électrode pour pile à combustible.

### BREVE DESCRIPTION DE L'INVENTION

Ainsi l'invention concerne un procédé de fabrication d'un assemblage membrane-électrode pour pile à combustible, comprenant une membrane, deux renforts, deux joints, des couches de diffusion gazeuse et une catalyse, le procédé comprenant les étapes suivantes :
- Une étape au cours de laquelle on dépose un joint sur chacun des renforts par sérigraphie,
- Une étape au cours de laquelle on dépose un élément chimique catalyseur sur chacune des faces de la membrane,
- Une étape au cours de laquelle on colle à chaud, sur chacune des faces de la membrane catalysée, un renfort porteur d'un joint sérigraphié,
- Une étape au cours de laquelle on dépose une couche de diffusion gazeuse sur chacune des faces de la membrane catalysée porteuse d'un renfort et d'un joint,
le procédé étant tel que les différents éléments sont maintenues sur un support par aspiration pendant au moins une partie des étapes du procédé.

On précise ici que dans la suite de la description, l'expression « élément chimique catalyseur » pourra être remplacée par le terme « catalyse » par souci de simplification de l'exposé. Cet élément chimique catalyseur est préférentiellement une encre comprenant du platine, de l'eau et des solvants.

L'utilisation d'une membrane catalysée permet de simplifier les différentes étapes ultérieures d'assemblage. En effet, une membrane qui présente deux couches de catalyse est plus stable qu'une membrane non catalysée, et donc plus facile à manipuler.

Le dépôt des couches de diffusion gazeuse ne nécessite pas obligatoirement de collage ou pressage à chaud. En effet, ces couches peuvent être maintenues uniquement par pression lors de l'empilage de la pile constituée d'une succession d'assemblage membrane-électrode et de plaques bipolaires.

Dans un mode de réalisation, l'étape au cours de laquelle on dépose un élément chimique catalyseur sur la membrane est effectuée en utilisant un procédé de dépôt direct compris dans le groupe comprenant : la flexographie, la sérigraphie et l'enduction. La catalyse de la membrane pourrait également être effectuée après avoir déposé les renforts sur la membrane. Dans ce cas, l'utilisation de procédés tels que la flexographie ou la sérigraphie, qui permettent l'impression de motifs, serait particulièrement avantageuse.

Dans un autre mode de réalisation, appelé « indirect », l'étape au cours de laquelle on dépose un élément chimique catalyseur sur la membrane est effectuée en utilisant un procédé de dépôt indirect comprenant les étapes suivantes :
- Une étape de dépôt de l'élément chimique catalyseur sur un support en Téflon par un procédé compris dans le groupe comprenant la flexographie, la sérigraphie et l'enduction, et
- Une étape de transfert de l'élément chimique catalyseur du support vers la membrane par un procédé de calandrage à chaud.

La catalyse est généralement déposée sous forme d'une encre contenant des solvants. Avant de manipuler la membrane catalysée, il est utile d'attendre que l'évaporation des solvants soit terminée. Dans le cas où on souhaiterait diminuer ce temps, il est possible, dans un mode de réalisation préférentiel, de prévoir une étape de séchage de la catalyse.

De la même façon, dans un mode de réalisation préférentiel, l'étape au cours de laquelle on dépose un joint par sérigraphie comprend une étape de polymérisation et de séchage des joints.

Dans un autre mode de réalisation encore, l'étape au cours de laquelle on dépose un joint par sérigraphie comprend une étape de contrôle de la qualité du joint. Cette étape peut être effectuée par une caméra HD qui vérifie la géométrie du joint, ou par une lecture laser qui mesure la géométrie en trois dimensions du joint. Cette étape peut être complétée en outre par une étape d'inscription d'un numéro de série et/ou d'identification sur l'ensemble renforts + joints, cette impression étant par exemple effectuée par jet d'encre, ou par impression laser ou matricielle.

Dans un mode de réalisation de l'invention, l'étape de collage à chaud est effectuée à une température comprise entre 100°C et 150°C, et encore plus préférentiellement à une température comprise entre 100°C et 120°C.

L'invention concerne également une ligne de fabrication d'assemblage membrane électrodes, comprenant un circuit permettant le déplacement d'un chariot sur lequel est installé un moule composé de secteurs en métal poreux d'un poste de fabrication à l'autre, chacun des postes permettant la mise en œuvre de l'une ou l'autre des étapes d'un procédé.

### BREVE DESCRIPTION DES FIGURES

D'autres objectifs et avantages de l'invention apparaîtront clairement dans la description qui va suivre d'un mode de réalisation préféré mais non limitatif, illustré par les figures suivantes dans lesquelles :
- la figure 1 montre schématiquement l'ensemble des étapes d'un procédé d'assemblage de pile à combustible mettant en œuvre un procédé de fabrication selon l'invention
- la figure 2 montre un procédé de sérigraphie pouvant être mis en œuvre dans un procédé selon l'invention,
- la figure 3 montre un procédé de flexographie pouvant être mis en œuvre dans un procédé selon l'invention, et
- la figure 4 montre une ligne d'assemblage permettant la mise en œuvre d'un procédé selon l'invention.

### DESCRIPTION DU MEILLEUR MODE DE REALISATION DE L'INVENTION

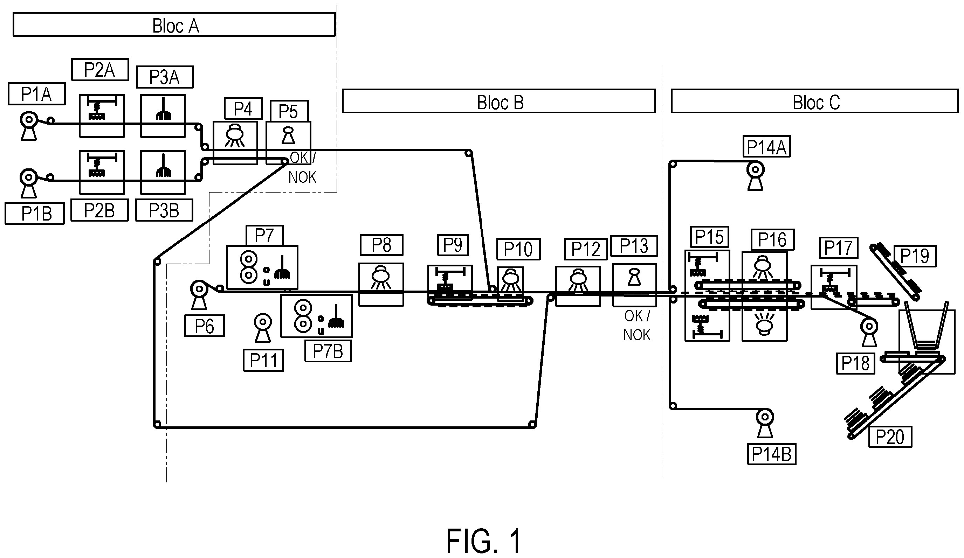

Sur la figure 1 montre les étapes d'un procédé selon l'invention. Ce procédé est schématiquement séparé en trois grands blocs :
- Un bloc A correspondant au dépôt des joints par sérigraphie sur des renforts,
- Un bloc B correspondant à la préparation des membranes et à leur intégration entre les renforts,
- Un bloc C correspondant à l'installation des couches de diffusion gazeuse et à l'assemblage final de la pile à combustible.
Chacun de ces blocs est composé de plusieurs étapes qui vont être décrites en détail. Sur la figure 1, chaque étape est représentée par un pictogramme représentant les moyens matériels permettant la mise en œuvre de cette étape.

**Dépôt des joints par sérigraphie sur les renforts :** Les renforts utilisés dans les piles à combustible sont des films polymères qui sont généralement livrés sous forme de rouleaux. Les étapes P1A et P1B correspondent donc à une étape de déroulage de deux renforts, respectivement un renfort supérieur (P1A) et un renfort inférieur (P1B). Ces rouleaux de renfort sont livrés avec de l'adhésif réactivable présent sur une face.

Une fois les renforts déroulés, ils sont découpés, respectivement aux étapes P21 et P2B. Les découpes, effectuées par laser ou par emboutissage, permettent la création des formes intérieures du renfort. En effet, les éléments de renforts sont destinés à être positionnés ultérieurement de manière à prendre en sandwich la bordure de la membrane sur toute sa périphérie, tout en laissant libre une partie centrale de la membrane.

Les étapes P3A et P3B correspondent au dépôt des joints par sérigraphie sur le renfort supérieur et inférieur.

Après dépôt des joints par sérigraphie, on prévoit une étape P4 de polymérisation et de séchage des joints. Dans un exemple particulier de réalisation, les joints sont positionnés sur un chariot qui se déplace dans un tunnel, par exemple d'une longueur de quatre mètres à une vitesse de 1,5 mètre par minutes, le tunnel étant placé à une température intérieure comprise entre 110°C et 150°C.

On contrôle ensuite, au cours de l'étape P5, la qualité de chacun des ensembles « renfort + joint ». Ce contrôle est effectué par exemple par une caméra haute définition ou par un lecteur laser. Les ensembles « renfort + joint » sont ensuite prêts à être déposés sur une membrane catalysée, comme décrit dans les prochains paragraphes.

**Préparation des membranes et à leur intégration entre les renforts :** Un procédé selon l'invention utilise une membrane catalysée. A cet effet, l'étape P7 prévoit le dépôt d'un élément chimique catalyseur sur le côté anodique de la membrane, et l'étape P7B prévoit le dépôt d'un élément chimique catalyseur sur le côté cathodique de la membrane. Ce dépôt est par exemple effectué par sérigraphie, par flexographie, par enduction ou par sprayage.

Dans un autre exemple de réalisation, la catalyse est imprimée sur une plaque de Teflon, et elle est ensuite transférée sur la membrane par un procédé de calandrage à chaud.

La membrane est un film polymère généralement livré en rouleau entre deux intercalaires. Ainsi, de manière avantageuse, le procédé comprend, avant l'étape P7, une étape P6 au cours de laquelle on déroule la membrane et on enlève la première intercalaire. En outre, une étape P11, située entre les étapes P7 et P7B, permet d'enlever la seconde intercalaire pour permettre la catalyse de la deuxième face au cours de l'étape P7B.

Après le dépôt de l'élément chimique catalyseur, il convient de faire sécher la catalyse. A cet effet, dans une étape P8, la membrane catalysée est placée dans un four à 45°C pendant 1 minute. La membrane est ensuite découpée, au cours d'une étape P9, au format correspondant par rapport à l'empilement souhaité, en utilisant une découpeuse cutter. Pendant cette étape de découpe, la membrane est maintenue en position par aspiration avec des ventouses, ou par des supports en aluminium fritté.

On colle alors, dans une étape P10, le premier ensemble « renfort+joint », issu du bloc A, sur la face supérieure de la membrane catalysée. Le collage est effectué à chaud à une température par exemple comprise entre 100°C et 150°C, et préférentiellement entre 100°C et 120°C.

On colle ensuite, à l'étape P12, le deuxième ensemble «renfort + joint» sur la face inférieure de la membrane catalysée. Ce collage est effectué dans les mêmes conditions que celui de l'étape P10. On contrôle ensuite la qualité de l'ensemble membrane + renforts + joints, par exemple en utilisant une caméra haute définition, à l'étape P13.

De manière avantageuse, les étapes P10 et P12 peuvent être réalisées simultanément, et on presse donc les renforts sur les deux faces en même temps.

**Installation des couches de diffusion gazeuse et assemblage final :** Avant de pouvoir installer les couches de diffusion gazeuse, il est utile de les découper, dans une étape P15. Au préalable, on déroule, aux étapes P14A et P14B les rouleaux de tissu carbone destiné à la formation des couches de diffusion gazeuse.

Les couches de diffusion sont alors déposées sur chacune des faces de l'ensemble « membrane catalysée + renforts + joints ». On précise ici qu'il n'est pas nécessaire d'effectuer un collage à ce stade. En effet, le maintien en position des couches de diffusion peut être effectué par la pression mécanique lors de l'assemblage ultérieur de la pile à combustible. L'étape P17 est une ultime étape de découpe, permettant le découpage extérieur de l'assemblage membrane-électrodes et des collecteurs de gaz de la pile à combustible. Au cours de l'étape P18, on évacue les déchets issus de cette découpe, et l'étape P19 correspond à l'arrivée des plaques bipolaires et à un empilement alternatif d'un assemblage membrane-électrode / plaque bipolaire, pour obtenir une pile à combustible complète en étape P20.

### Sérigraphie et flexographie :

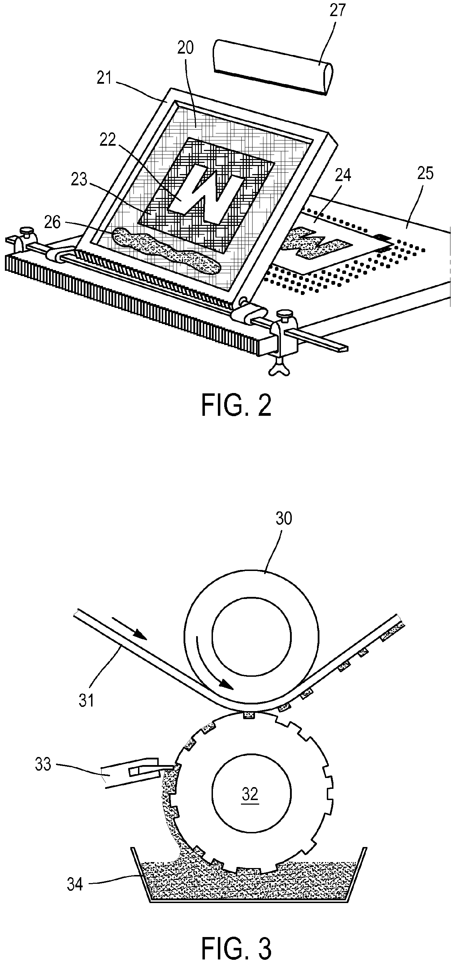

La figure 2 montre un système permettant la mise en œuvre d'un procédé de sérigraphie tel qu'utilisé dans plusieurs étapes de la présente invention. Ce système comprend un écran ou cadre 20, formé d'un tissu en PET 21, également appelé treillis, dont les mailles et le diamètre de fil peuvent être adaptés aux différentes utilisations.

Pour la création du motif à réaliser, le tissu est enduit d'un produit photosensible appelé émulsion sur lequel est déposé un chablon correspondant au motif à réaliser. Dans le cas présent, le motif à réaliser correspond à la partie centrale d'une membrane échangeuse d'ions, laissée libre après l'installation des renforts.

Après avoir subi une exposition à une lampe UV, le produit photosensible durcit à l'exception de la zone masquée par le chablon. Le surplus est ensuite nettoyé. Ainsi, le treillis comporte alors des mailles ouvertes 22, formant le motif, et des mailles obturées 23.

Une fois ce cadre, ou écran, fabriqué, il est alors possible d'effectuer un dépôt de catalyse par sérigraphie. Pour ce faire, la membrane 24, éventuellement catalysée sur une face, est installée sur le support 25, la face non catalysée étant installée vers le haut. L'écran 20 est alors positionné sur le support 25, au-dessus de la membrane 24. Une quantité suffisante de catalyse 26 est alors déposée sur le cadre, et étalé de façon régulière sur le motif mais sans appuyer trop fort pour éviter de lui faire traverser le treillis. Cette opération est appelée « le nappage ».

Puis, une racle 27 formée d'un profil de polyuréthane ou métallique dont la dureté et la raideur peuvent être adaptées, est passée tout le long du profil avec un angle variable proche de 45°. On précise ici que le cadre 20 est installé un peu au-dessus du support 25 de manière à éviter un contact entre les deux avant le passage de la racle.

La racle 27 va alors forcer le treillis 21 à se déformer, l'amenant au contact du support 32. Le La catalyse est ensuite forcée au passage de la racle à traverser le treillis pour venir se déposer sur la membrane 24.

La racle permet aussi de racler le surplus de catalyse à la surface de l'écran, celle-ci étant dès lors prête pour une deuxième dépose.

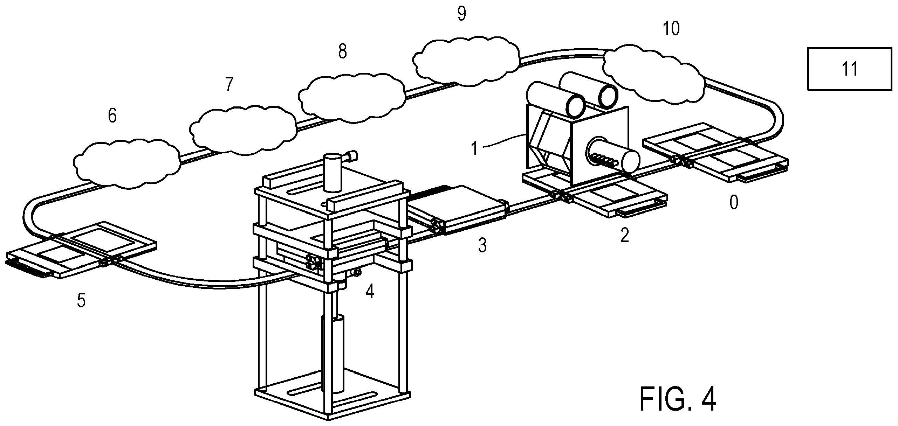

La figure 3 permet d'illustrer un autre procédé pour effectuer ce dépôt sous forme de motif, à savoir un procédé de flexographie, également appelé « tampon encreur ». Le système montré en figure 4 comprend un rouleau de support 30, sur lequel est installé la membrane 31 à catalyser. Le système comprend également un rouleau encreur 32 sur lequel le motif à déposer est formé en surépaisseur. Le système comprend en outre une roulette 33 destinée à éliminer, après trempage dans le bac 34, l'encre présente sur les parties du rouleau encreur ne formant pas le motif.

Ainsi, lors du contact entre le rouleau de support 30 et le rouleau encreur 32, le motif dessiné sur le rouleau encreur 32 est transféré sur la membrane 31.

**Ligne d'assemblage :** La figure 4 illustre un exemple de ligne d'assemblage permettant la mise en œuvre d'un procédé selon l'invention. Cette ligne comprend un circuit 100 permettant le déplacement d'un chariot sur lequel est installé un moule en métal poreux 200 qui servira de support aux différentes étapes d'assemblage du procédé. Sur la figure 4, certains postes sont représentés en détail, quand d'autres sont simplement schématisés.

L'utilisation d'un métal poreux permet de brancher, sous le moule, des pompes à vide, non représentées sur la figure, qui permettent le maintien des différents éléments en position sur le moule.

En entrée de la ligne d'assemblage, au point 0, le moule reçoit deux ensembles « renforts + joints », par exemple issus de l'étape P6 de la figure 1. Dans la suite, pour simplifier la description, on utilisera uniquement le terme « renforts » pour désigner ces ensembles.

Le poste 1 est un poste permettant la manipulation de la membrane catalysée. 300 Ainsi, le moule portant les renforts et joints se positionne sous le poste 1, et accueille la membrane catalysée sur un des deux renforts. Au poste 3, le moule est refermé, ce qui permet un positionnement du deuxième renfort. Une fois le 2^{ème} renfort positionné sur la membrane catalysée, le moule est réouvert. Le poste 4 permet un pressage à chaud, à une température préférentiellement située en 100°C et 120°C. L'action de pressage est effectuée par la poussée verticale d'un vérin installé sous le moule lorsque celui-ci est présent dans le poste et en butée supérieure sur une plaque de blocage.

La ligne d'assemblage comporte ensuite les postes suivants :
- Le poste 5 permet le refroidissement de l'ensemble renforts + membrane,
- Au poste 6, une couche de diffusion gazeuse est déposée sur une première face de la membrane, et le moule est refermé. On précise ici que, dans certains cas, la couche de diffusion gazeuse comporte une bande de colle. Cette bande de colle est apposée via une encolleuse, et dans ce cas, la ligne d'assemblage comprend un robot équipé d'une ventouse ou d'un préhenseur électrostatique pour transporter la couche de diffusion gazeuse depuis l'encolleuse jusqu'à la ligne d'assemblage.
- Au poste 7, on procède à un retournement de l'assemblage, afin que la seconde face de la membrane devienne la face supérieure ; Ce retournement est effectué par une simple ouverture du moule, combinée à une commande d'aspiration sur chacune des plaques du moule. En effet, lors de l'ouverture du moule, la plaque pour laquelle l'aspiration a été coupée n'emportera aucun élément, quand l'assemblage restera solidaire de la plaque pour laquelle l'aspiration est maintenue,
- Au poste 8, on dépose une couche de diffusion gazeuse sur la seconde face de la membrane, et on referme le moule,
- Au poste 9, on presse l'ensemble à chaud, en utilisant des moyens similaires à ceux du poste 4. On précise toutefois que cette étape de pressage à chaud est optionnelle,
- Au poste 10, on procède à l'ouverture du moule, et on imprime éventuellement sur l'assemblage des numéros de série ou d'identification, par jet d'encre, ou par impression laser ou matricielle.
- Enfin, au poste 11, la MEA est récupérée pour une étape de découpage final correspondant à l'étape P17 de la figure 1.

L'ensemble des opérations se font sous une atmosphère contrôlée en termes de poussière, de température et d'humidité pour éviter une dégradation de l'assemblage. En outre, comme précédemment indiqué, le vide est fait à chaque poste au niveau des plaques du moule, pour gérer la solidarisation des différents éléments avec le moule. Dans un mode de réalisation préférentiel, les moules sont équipés de réservoir de secours pour pallier à toute micro-fuite qui pourrait de produire lors du déplacement du moule entre deux postes.

## Revendications

1. Procédé de fabrication d'un assemblage membrane-électrode pour pile à combustible, comprenant une membrane, deux renforts, deux joints, des couches de diffusion gazeuse et une catalyse, le procédé comprenant les étapes suivantes :
- Une étape au cours de laquelle on dépose un joint sur chacun des renforts par sérigraphie,
- Une étape au cours de laquelle on dépose un élément chimique catalyseur sur chacune des faces de la membrane,
- Une étape au cours de laquelle on colle à chaud, sur chacune des faces de la membrane catalysée, un renfort porteur d'un joint sérigraphié,
- Une étape au cours de laquelle on dépose une couche de diffusion gazeuse sur chacune des faces de la membrane catalysée porteuse d'un renfort et d'un joint,
le procédé étant tel que les différents éléments sont maintenues sur un support par aspiration pendant au moins une partie des étapes du procédé.

2. Procédé de fabrication selon la revendication 1, dans lequel l'étape au cours de laquelle on dépose un élément chimique catalyseur sur la membrane est effectuée en utilisant un procédé de dépôt direct compris dans le groupe comprenant : la flexographie, la sérigraphie et l'enduction.

3. Procédé de fabrication selon la revendication 1, quand lequel l'étape au cours de laquelle on dépose un élément chimique catalyseur sur la membrane est effectuée en utilisant un procédé de dépôt indirect comprenant les étapes suivantes :
- Une étape de dépôt de l'élément chimique catalyseur sur un support en Téflon par un procédé compris dans le groupe comprenant la flexographie, la sérigraphie et l'enduction, et
- Une étape de transfert de l'élément chimique catalyseur du support vers la membrane par un procédé de calandrage à chaud.

4. Procédé de fabrication selon la revendication 2, dans lequel l'étape au cours de laquelle on dépose un élément chimique catalyseur comprend en outre une étape de séchage de la catalyse.

5. Procédé de fabrication selon l'une des revendications précédentes dans lequel l'étape au cours de laquelle on dépose un joint par sérigraphie comprend une étape de polymérisation et de séchage des joints.

6. Procédé de fabrication selon l'une des revendications précédentes dans lequel l'étape au cours de laquelle on dépose un joint par sérigraphie comprend une étape de contrôle de la qualité du joint.

7. Procédé de fabrication selon l'une des revendications précédentes, dans lequel l'étape de collage à chaud est effectuée à une température comprise entre 100 et 150°C.

8. Ligne de fabrication d'assemblage membrane électrodes, comprenant un circuit (100) permettant le déplacement d'un chariot sur lequel est installé un moule en métal poreux 200 d'un poste de fabrication à l'autre, chacun des postes permettant la mise en œuvre de l'une ou l'autre des étapes d'un procédé selon l'une des revendications 1 à 7.

## Patentansprüche

1. Verfahren zur Fertigung einer Membran-Elektroden-Anordnung für eine Brennstoffzelle, umfassend eine Membran, zwei Verstärkungen, zwei Dichtungen, Gasdiffusionsschichten und eine Katalyse, das Verfahren umfassend die folgenden Schritte:
- einen Schritt, bei dem mittels Siebdruck eine Dichtung auf jede der Verstärkungen aufgebracht wird,
- einen Schritt, bei dem ein chemisches Katalysatorelement auf jede der Seiten der Membran aufgebracht wird,
- einen Schritt, bei dem auf jede der Seiten der katalysierten Membran eine Verstärkung heißgeklebt wird, die eine siebgedruckte Dichtung trägt,
- einen Schritt, bei dem eine Gasdiffusionsschicht auf jede der Seiten der katalysierten Membran aufgebracht wird, die eine Verstärkung und eine Dichtung trägt, wobei das Verfahren so ausgelegt ist, dass die verschiedenen Elemente zumindest während einiger der Schritte des Verfahrens durch Ansaugung auf einem Träger gehalten werden.

2. Fertigungsverfahren nach Anspruch 1, wobei der Schritt, bei dem ein chemisches Katalysatorelement auf die Membran aufgebracht wird, unter Zuhilfenahme eines Verfahrens der direkten Aufbringung durchgeführt wird, das in der Gruppe enthalten ist, die Folgendes umfasst: Flexodruck, Siebdruck und Beschichtung.

3. Fertigungsverfahren nach Anspruch 1, wenn der Schritt, bei dem ein chemisches Katalysatorelement auf die Membran aufgebracht wird, unter Zuhilfenahme eines Verfahrens der indirekten Aufbringung durchgeführt wird, umfassend die folgenden Schritte:
- einen Schritt des Aufbringens des chemischen Katalysatorelements auf einen Teflonträger durch ein Verfahren, das in der Gruppe enthalten ist, die Flexodruck, Siebdruck und Beschichtung umfasst, und
- einen Schritt des Übertragens des chemischen Katalysatorelements vom Träger auf die Membran durch ein Heißkalandrierverfahren.

4. Fertigungsverfahren nach Anspruch 2, wobei der Schritt, bei dem ein chemisches Katalysatorelement aufgebracht wird, ferner einen Schritt des Trocknens der Katalyse umfasst.

5. Fertigungsverfahren nach einem der vorhergehenden Ansprüche, wobei der Schritt, bei dem eine Dichtung mittels Siebdruck aufgebracht wird, einen Schritt des Polymerisierens und des Trocknens der Dichtungen umfasst.

6. Fertigungsverfahren nach einem der vorhergehenden Ansprüche, wobei der Schritt, bei dem eine Dichtung mittels Siebdruck aufgebracht wird, einen Schritt des Prüfens der Qualität der Dichtung umfasst.

7. Fertigungsverfahren nach einem der vorhergehenden Ansprüche, wobei der Schritt des Heißklebens bei einer Temperatur zwischen 100 und 150 °C durchgeführt wird.

8. Fertigungsstrecke für Membran-Elektroden-Anordnung, umfassend einen Kreis (100), der die Bewegung eines Wagens, auf dem eine Form aus porösem Metall 200 angebracht ist, von einer Fertigungsstation zur anderen gestattet, wobei jede der Stationen die Durchführung des einen oder anderen der Schritte eines Verfahrens nach einem der Ansprüche 1 bis 7 gestattet.

## Claims

1. Method for manufacturing a membrane electrode assembly for a fuel cell, comprising a membrane, two reinforcers, two seals, gas diffusion layers and a catalyst, the method comprising the following steps:
- a step during which a seal is applied to each of the reinforcers using screen printing,
- a step during which a catalytic chemical element is applied to each of the faces of the membrane,
- a step during which a reinforcer bearing a screen-printed seal is thermally bonded to each of the faces of the catalysed membrane,
- a step during which a gas diffusion layer is applied to each of the faces of the catalysed membrane bearing a reinforcer and a seal,
the method being such that the various elements are held on a support by suction during at least some of the steps of the method.

2. Manufacturing method according to Claim 1, in which the step during which a catalytic chemical element is applied to the membrane is performed using a direct-deposition method included in the group comprising: flexography, screen printing and coating.

3. Manufacturing method according to Claim 1, when which the step during which a catalytic chemical element is applied to the membrane is performed using an indirect-deposition method including the following steps:
- a step of applying the catalytic chemical element to a Teflon support using a method comprised in the group including flexography, screen printing and coating, and
- a step of transferring the catalytic chemical element from the support onto the membrane using a hot rolling method.

4. Manufacturing method according to Claim 2, in which the step during which a catalytic chemical element is applied further comprises a step of drying the catalyst.

5. Manufacturing method according to one of the preceding claims, in which the step during which a seal is applied by screen printing comprises a step of polymerization and of drying of the seals.

6. Manufacturing method according to one of the preceding claims, in which the step during which a seal is applied by screen printing comprises a step of inspecting the quality of the seal.

7. Manufacturing method according to one of the preceding claims, in which the hot-bonding step is performed at a temperature comprised between 100 and 150°C.

8. Production line for manufacturing membrane electrode assemblies, comprising a circuit (100) allowing a carriage, on which is installed a mould 200 made up of porous metal segments, to be moved from one manufacturing workstation to another, each of the workstations allowing implementation of one or another of the steps of a method according to one of Claims 1 to 7.
